Europäisches Patentamt

European Patent Office

Office européen des brevets

(11) Publication number: **0 422 715 A1**

# EUROPEAN PATENT APPLICATION

(21) Application number: 90202575.8

(22) Date of filing: 28.09.90

(51) Int. Cl.5: **B01D 33/04, B01D 33/056**

(30) Priority: 09.10.89 NL 8902500

(43) Date of publication of application:
17.04.91 Bulletin 91/16

(84) Designated Contracting States:
AT BE CH DE DK ES FR GB GR IT LI LU NL SE

(71) Applicant: Pannevis B.V.
Elektronweg 24
NL-3542 AC Utrecht(NL)

(72) Inventor: Prinssen, Alphons Arnoldus
Johannes Antonius
Van Straelenlaan 31
NL-5224 GN s'-Hertogenbosch(NL)

(74) Representative: Noz, Franciscus Xaverius, Ir.
et al
Algemeen Octrooibureau P.O. Box 645
NL-5600 AP Eindhoven(NL)

(54) **Device for separating fluid from a mixture of solid matter and fluid.**

(57) The invention relates to a device for separating fluid from a mixture of solid matter and fluid, said device being provided with an endless filtering belt moving in a continuous path during operation. On the upper part of the belt the material to be treated is to be deposited, whilst means are provided by which a sub-atmospheric pressure can be generated at several locations under the filtering belt. An endless support means is provided which passes moisture and which moves in a continuous path during operation, said support means supporting the upper part of the filtering belt in a trough accommodating the upper part of the filtering belt and the part of the support means located under said upper part of the filtering belt. When seen in the direction of movement of the filtering belt, connections for a vacuum source are provided at spaced apart locations on said trough. The support means is provided with partitions which are located spaced apart in the longitudinal direction of the support means and which extend transversely to the longitudinal direction of said support means.

Fig 1

EP 0 422 715 A1

## DEVICE FOR SEPARATING FLUID FROM A MIXTURE OF SOLID MATTER AND FLUID.

The invention relates to a device for separating fluid from a mixture of solid matter and fluid, said device being provided with an endless filtering belt moving in a continuous path during operation, on the upper part of which the material to be treated is to be deposited, whilst means are provided by which a sub-atmospheric pressure can be generated at several locations under the filtering belt.

Such a device is e.g. known from Dutch Patent Application 7210541. With this known device a plurality of containers, which are in communication with one or more vacuum sources, are moved to and fro during operation.

The object of the invention is to obtain a device wherein use can be made of a stationary vacuum container with a continuously moving filtering belt, whilst it is still possible to prevent wear of the filtering belt.

According to the invention this can be accomplished in that there is provided an endless support means which passes moisture and which moves in a continuous path during operation, said support means supporting the upper part of the filtering belt in a trough accommodating the upper part of the filtering belt and the part of the support means located under said upper part of the filtering belt, on which trough, when seen in the direction of movement of the filtering belt, connections for a vacuum source are provided at spaced apart locations, whilst the support means is provided with partitions which are located spaced apart in the longitudinal direction of the support means and which extend transversely to the longitudinal direction of said support means.

When using the construction according to the invention the support means prevents undesirable contact of the filtering cloth with the bottom of the trough, whereby the support means may be suitably formed to oppose or prevent the occurrence of friction between the bottom of the trough and the support means. The partitions extending transversely to the longitudinal direction of the support means divide the support means, as it were, into separate compartments which move along with the support means and the filtering cloth, said compartments successively being put into communication with the various connections on the trough, via which a vacuum can be generated.

The invention will be further explained with reference to an embodiment of the construction according to the invention diagrammatically illustrated in the accompanying Figures.

Figure 1 is a diagrammatic side view of a device according to the invention.

Figure 2 is a diagrammatic cross-section of the trough of the device illustrated in Figure 1, with an upper part of a filtering cloth and an upper part of a support means located therein.

Figure 3 is a larger-scale side elevational view of a part of a support means.

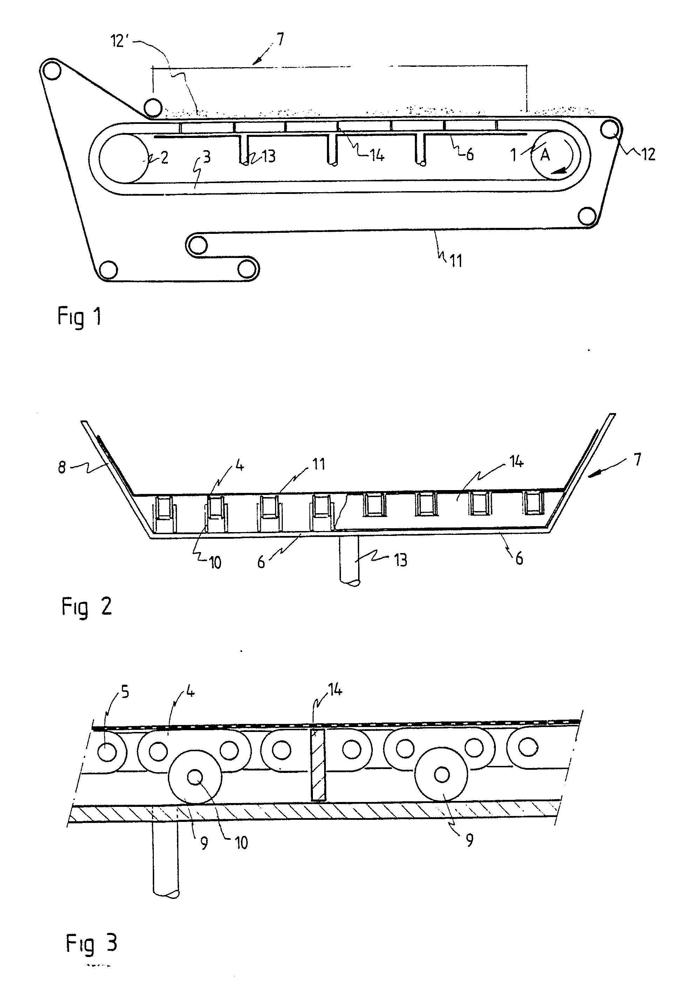

As is shown in Figure 1 the device comprises a pair of drums 1 and 2 which are rotatable about horizontal axes of rotation in a frame (not shown), around which drums 1 and 2 there is passed an endless support means 3. In the illustrated embodiment the support means is formed by a link chain, built up of a plurality of links 4 disposed side by side and behind one another, said links being formed of elongated strips or grate-shaped parts and being pivotally interconnected by means of pivot pins 5 extending transversely to the longitudinal directions of the support means 3. Because of the relatively large interspaces between adjacent links 4 (Figure 2) fluid can easily flow down between the links 4.

The upper part of the link chain 3 is supported by the bottom 6 of a trough 7 disposed between the two drums 1 and 2, said trough being provided with upwardly sloping side walls 8 joining up with the longitudinal edges of the bottom 6. The endless support means is thereby supported on the bottom 6 of the trough by means of rollers 9, which are pivotally connected to the links 4 about axes of rotation 10 extending parallel to the pivot pins 5, as is illustrated in Figure 3.

The support means or link chain 3 can be moved by driving the drum 1 in the direction according to arrow A, so that during operation that portion of the upper part of the support means which is located in the trough 7 will move from the left towards the right, when seen in Figure 1.

The device is furthermore provided with an endless filtering belt 11, whose upper part is located on the upper part of the support means 3 present in the trough 7. The filtering belt 11 is wider than the bottom 6 of the trough 7, so that the longitudinal edges of the filtering belt 11 extend upwards along the side walls 8 of the trough, as is depicted in Figure 2.

As furthermore appears from Figure 1 the filtering belt 11 is passed around the ends and the lower part of the support means 3 by means of a plurality of guide rolls 12, in order to avoid a possible collision with said parts.

Near the left-hand end of the device, when seen in Figure 1, material to be treated, i.e. a mixture of fluid and solid matter, can be conventionally deposited, by means not shown, on the upper part of the filtering belt 11 supported on the support means 3. The support means 3 will carry along the upper part of the filtering belt 11 with the material 12' present thereon towards the right, when seen in Figure 1, whereby the material will be discharged in a conventional manner near the right-hand end of the device.

When seen in the direction of movement of the upper part of the filtering belt 11 branch connections 13 are mounted in spaced apart relation on the bottom 6 of the trough, which branch connections may be connected, e.g. in the manner described in the above-mentioned Dutch Patent Application 7210541, to containers in which a sub-atmospheric pressure is generated with a view to sucking the fluid out of the mixture to be treated.

The endless link chain is furthermore provided with regularly spaced division plates 14, when seen in the longitudinal direction of the link chain 3, in such a manner that they slide across the bottom 6 of the trough and extend across the entire width of the trough. Thus the link chain supporting the filtering cloth is divided, as it were, into a plurality of compartments separated from each other by the division plates 14, which compartments are successively connected to one of said branch connections 13, so that at that location fluid can be extracted from the mixture through the filtering belt and the support means and be sucked out of the compartment in question. The partitions thereby prevent any loss of sub-atmospheric pressure, in particular near the ends of the upper part of the support means.

## Claims

1. A device for separating fluid from a mixture of solid matter and fluid, said device being provided with an endless filtering belt moving in a continuous path during operation, on the upper part of which the material to be treated is to be deposited, whilst means are provided by which a sub-atmospheric pressure can be generated at several locations under the filtering belt, characterized in that there is provided an endless support means which passes moisture and which moves in a continuous path during operation, said support means supporting the upper part of the filtering belt in a trough accommodating the upper part of the filtering belt and the part of the support means located under said upper part of the filtering belt, on which trough, when seen in the direction of movement of the filtering belt, connections for a vacuum source are provided at spaced apart locations, whilst the support means is provided with partitions which are located spaced apart in the longitudinal direction of the support means and which extend transversely to the longitudinal direction of said support means.

2. A device according to claim 1, characterized in that said support means is provided with rollers, which are freely rotatable about axes of rotation extending perpendicularly to the longitudinal axis of said support means, the arrangement being such that the upper part of said support means is supported on the bottom of said trough via rollers, whilst said rollers do not project above said support means.

3. Device according to claim 1 or 2, characterized in that said support means is built up of links disposed side by side and behind one another, said links being pivotally interconnected by means of pivot pins extending perpendicularly to the longitudinal direction of said support means.

4. Device according to any one of the preceding claims, characterized in that said support means is driven and that the filtering belt is pulled along by said support means.

5. Device according to any one of the preceding claims, characterized in that the distance between the partitions is adjustable.

Fig 1

Fig 2

Fig 3

| | European Patent Office | EUROPEAN SEARCH REPORT | Application Number |
|---|---|---|---|

**EP 90 20 2575**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 200 949   (W. AULICH et al.)<br>* Column 4, lines 39-68 *<br>_ _ _ | 1,4 | B 01<br>D 33/04<br>B 01 D 33/056 |
| X | DE-B-1 223 806   (WALZBAU)<br>* Column 2, lines 40-52; column 3, lines 33-38; column 4, lines 1-15 *<br>_ _ _ | 1,4 | |
| A | DE-A-1 938 263   (F. BILABEL)<br>* Figure 4 *<br>_ _ _ | 1,5 | |
| D | NL-A-7 210 541   (DE GOOYER'S TABAKS N.V.)<br>* Page 7, lines 1-15<br>* & GB-A-1 416 186 (Cat. A)<br>_ _ _ _ _ | 1 | |

| | | TECHNICAL FIELDS SEARCHED (Int. Cl.5) |
|---|---|---|
| | | B 01 D |

The present search report has been drawn up for all claims

| Place of search | Date of completion of search | Examiner |
|---|---|---|
| The Hague | 26 October 90 | KERRES P.M.G. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention

E : earlier patent document, but published on, or after the filing date
D : document cited in the application
L : document cited for other reasons

&amp; : member of the same patent family, corresponding document